(19) Europäisches Patentamt

European Patent Office

Office européen des brevets

(11) **EP 2 696 632 A2**

(12) **EUROPEAN PATENT APPLICATION**

(43) Date of publication:
**12.02.2014 Bulletin 2014/07**

(51) Int Cl.:
***H04W 52/02*** *(2009.01)*

(21) Application number: **13179788.8**

(22) Date of filing: **08.08.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **09.08.2012 IN CH32792012
31.07.2013 KR 20130091034**

(71) Applicant: **Samsung Electronics Co., Ltd
Gyeonggi-do 443-742 (KR)**

(72) Inventors:
• **Jain, Nitin**
  **560093 Bangalore (IN)**
• **Kizhakkemadam, Sriram N**
  **560093 Bangalore (IN)**

(74) Representative: **Birchenough, Lewis et al
Harrison Goddard Foote LLP
Saviour House
9 St Saviourgate
York YO1 8NQ (GB)**

(54) **System and method of power savings for mobile device using cloud service**

(57) A method and system for power saving of a remote device determines whether to offload the application to a cloud server by comparing the cost of computing the application data in the remote device to that of computing the same application data in a cloud server. If the former cost is greater, then the remote device offloads the application to a cloud server. The method takes into the account the parameters such as distance between the remote device and the access network, the power required to transmit the application data from remote device to the cloud server for calculating the power required for computing the application data in the cloud server.

FIG.1

EP 2 696 632 A2

**Description**

**TECHNICAL FIELD**

The present disclosure relates to field of power saving in mobile devices and more particularly relates to the application of cloud computing for power savings in mobile devices.

**BACKGROUND**

Mobile or wireless handsets, popularly known as "cell phones" or "smart phones" are becoming a permanent fixture in today's human communication environment because of the flexibility and mobility afforded by the wireless communication. With ever-advancing technology affording more and more power and utility, today's mobile handsets significantly dwarf those of just a few years ago in utility, functionality, compactness, and ergonomically-attractive designs. However, despite increasing design sophistication and processing power, mobile handsets remain unable to satisfy heavy processing/resource demands of today's advanced mobile applications such as gaming, graphics, and multimedia applications residing in mobile handsets or downloaded by users of the handsets.

As the features supported by a mobile phone increase exorbitantly so does the hardware and software complexity of the device. With mobile device capabilities converging to a fully fledged personalized computer, mobile device demands increased power consumption. Some of the generic solutions for increasing the battery are to provide a battery with a longer backup time or to have power saving techniques as standardized solutions. However, there is a practical limit to increasing the battery backup and power saving techniques can be used only in idle periods of application.

**SUMMARY**

A method and system for power saving in a mobile device perform a handover operation from one serving base station or transmitting point or a group of transmitting points to another transmitting point or a group of transmitting points depending on the computing requirements of the mobile device.

A method offloads the application data to available transmission points based on cost of local processing, cost of remote processing and cost of transmission and reception.

A method for providing communication between remote device and cloud service comprises computing the power required for sending application data to the cloud service, computing the power required to run the application in the remote device, and offloading the application data to the cloud service by the remote device for processing the application if the power required for sending application data to the cloud service is less than the power required to run the application within the remote device.

A remote device communicating with a cloud service comprises an integrated circuit further comprising at least one processor, at least one memory having a computer program code in the circuit, the at least one memory and the computer program code configured to with the at least one processor cause the device to compute the power required for sending application data to the cloud service, compute the power required to run the application within the remote device and offload the application data to the cloud service by the remote device for processing the application if the power required for sending application data to the cloud service is less than the power required to run the application in the remote device.

These and other aspects of the embodiments herein will be better appreciated and understood when considered in conjunction with the following description and the accompanying drawings. It should be understood, however, that the following descriptions, while indicating preferred embodiments and numerous specific details thereof, are given by way of illustration and not of limitation. Many changes and modifications may be made within the scope of the embodiments herein without departing from the spirit thereof, and the embodiments herein include all such modifications.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

**EP 2 696 632 A2**

**BRIEF DESCRIPTION OF THE DRAWINGS**

For a more complete understanding of the present disclosure and its advantages, reference is now made to the following description taken in conjunction with the accompanying drawings, in which like reference numerals represent like parts:

FIG. 1 illustrates the heterogeneous deployment of macro, femto cells with cloud resources, according to embodiments as disclosed herein;

FIG. 2 illustrates a general block diagram of the user equipment, according to embodiments as disclosed herein;

FIG. 3 illustrates a sequence flow diagram of offloading applications to the cloud server, according to embodiments as disclosed herein;

FIG. 4 illustrates a sequence flow diagram of offloading applications to the cloud server which is a part of the access network, according to embodiments as disclosed herein;

FIG. 5 illustrates the process of broadcast mechanism, according to embodiments as disclosed herein; and

FIG. 6 illustrates a computing environment for implementing the application, according to the embodiments as disclosed herein.

**DETAILED DESCRIPTION**

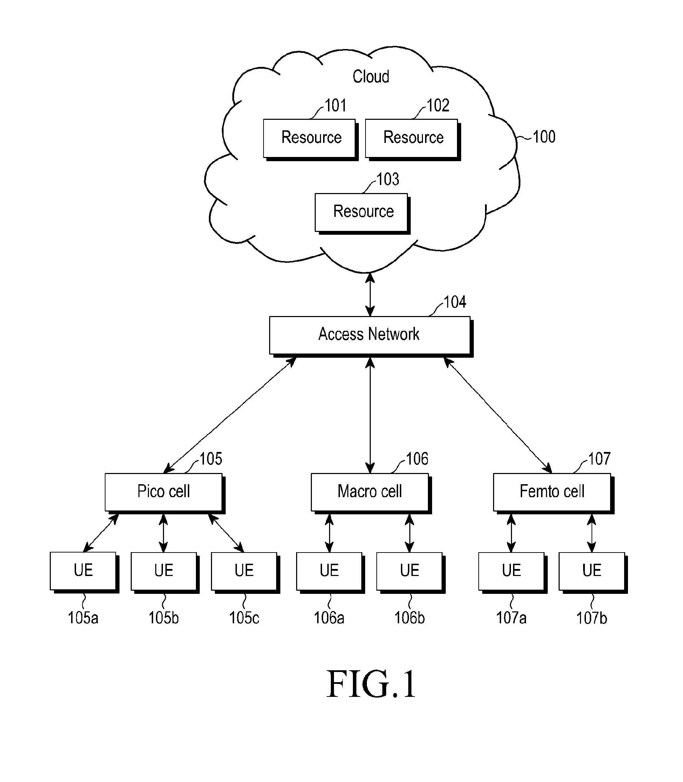

FIGURES 1 through 6, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged electronic devices. The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein can be practiced and to further enable those of skill in the art to practice the embodiments herein. Accordingly, the examples should not be construed as limiting the scope of the embodiments herein.

The embodiments herein achieve a method and system in which a user equipment (UE) is handed over from one transmission point to another depending on the application requirements of the UE and provision of cloud services at the transmission point (TP) which is based on the cost of processing the application within UE, the cost of transmission and reception to the cloud server and processing of the same application remotely on a cloud server.

The UE computes the power required to send the application data to the base station. The required transmission power can depend upon and not limited to the distance between the UE and the base station, the channel characteristics, the influence of the local environment, the transmitter and receiver structure at both the base station and the UE. Further, the UE compares this estimated power with the power required to run the application within the UE. If the UE finds the difference between these two values, then the UE can request the cloud server for computing resources and based on the information exchange the application is offloaded to the cloud server.

In an embodiment, UE takes various parameters into account for making the decision to offload the application to a cloud server. These parameters can include but not limited to cost for the user if the application is at the UE, cost for the user if the application is installed at the cloud server, memory requirements to store and run the application either at the UE or at the cloud server etc. The application can be executed either at the UE or at the cloud server.

In an embodiment, the user equipment can be a hand-held telephone, a laptop computer, tablet, personal digital assistant (PDA) and the like.

In an embodiment, the power refers to electrical power or electrical energy that can be obtained by UE from an exterior power supply, or battery.

Throughout the description the term user equipment (UE) and remote device is used interchangeably.

Referring now to the drawings, and more particularly, FIGS. 1 through 6, where similar reference characters denote corresponding features consistently throughout the figures, there are shown preferred embodiments.

FIG. 1 illustrates the heterogeneous deployment of macro, femto cells with cloud resources, according to embodiments as disclosed herein. As depicted in the figure, there exists a cloud 100 with resources such as resource 101, resource 102 and resource 103. The cloud 100 is in communication with the access network 104. The access network 104 provides connectivity to plurality of cells. In an embodiment, the cells can be pico cell 105, macro cell 106 and/or femto cell 107 and so on. In an embodiment, a plurality of user equipments (UEs) are connected to pico cells 105, macro cells 106 and/or femto cells 107. These pico cell 105, macro cell 106 and femto cell 107 are deployed by the access network 104 for providing enhanced connectivity to the UEs. In an embodiment, the access network can be a base station that provides the connectivity to the UEs. In an embodiment, the UEs request the cloud 100 for computing resources and offload the application processes to the cloud 100 through the access network 104 based on the response

3

from the cloud 100. Then the cloud 100 computes the application processes offloaded by the UE and a connection between the UE and the cloud 100 will be established through the access network 104.

In the heterogeneous network, the access network 104 has deployed pico cell 105, macro cell 106 along with femto cell 107 so that various cell sizes are available and the power saving requirements are different in each of these cells for a fixed Quality of Service (QoS). When a UE needs to offload any application processes to the cloud 100, the UE can be handed over to a pico cell 105, a macro cell 106, or a femto cell 107 depending on the channel conditions of the UE and the availability of cloud services in the target pico, macro or femto cell.

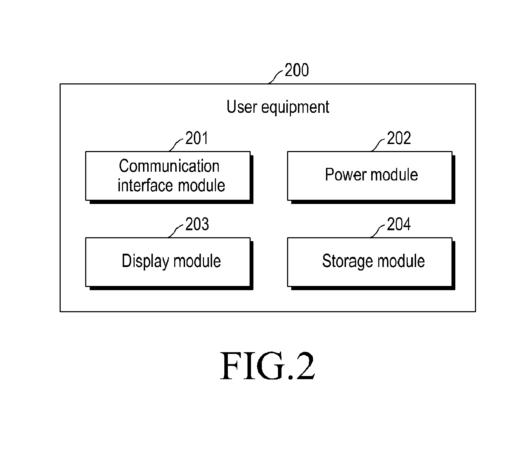

FIG. 2 illustrates a general block diagram of the user equipment according to embodiments of the present disclosure. As depicted in the figure, the user equipment 200 includes a communication interface module 201, a power module 202, a display module 203 and a storage module 204. The communication interface module 201 provides the communication with the access network 104 through a pico cell 105, macro cell 106 or femto cell 107. Further, the communication interface module 201 allows the UE to communicate with the cloud 100 through access network 104. The power module 202 holds the battery information. The battery information includes the amount of charge that the UE possesses and the time period for which the UE will be in operation and so on. The display module 203 includes a user interface which can be a key pad or through any other means by which a user can input some data into a UE. The storage module 204 includes memory for storing applications. The memory of the UE 200 can be either an internal memory where certain executing instructions are stored or an external memory such as memory cards or any external hard disk drives and so on.

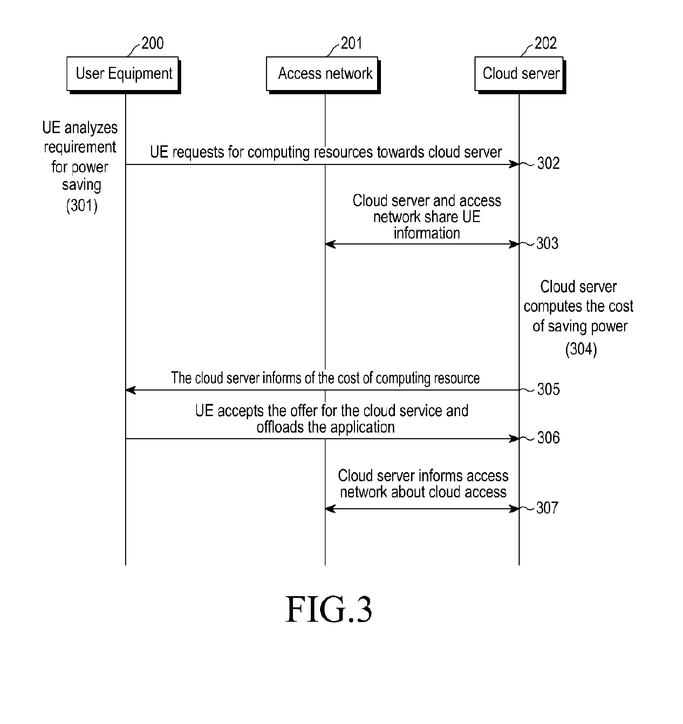

FIG. 3 illustrates a sequence flow diagram of offloading application processes to the cloud server, according to embodiments of the present disclosure. The method considers various parameters before offloading the application processes to a remote cloud server. The various parameters that are used by the method for computation are described herein as follows.

"$E_t$" refers to the amount of energy required to transmit one bit of data from UE to the remote server. "$E_m$ (B)" represents the amount of energy required by the modem to process 'B' bits.

"$E_a$(B)" refers to the amount of energy required to process 'B' bits of the at the UE. "$E_s$(B)" represents the amount of energy consumed to process the application at the server in the cloud.

"$C_{UE}$" refers to cost incurred to transmit one bit by the network and "$g(E\_t(R)$" represents an additional redundancy that has to be provided by the channel coder to ensure a target Bit Error Rate (BER) at the receiver.

"C(t)UE" refers to a threshold cost for UE depending on which it will decide whether an application data is offloaded to cloud server or not.

The UE decides to offload the computation to the cloud sever based on the following optimization problems described herein. In the first optimization case, the energy savings subject to the cost constraint are evaluated using the equations mentioned herein below

$$\max_R E_a(B) - E_m(B) - BE_t(\mathbf{R, SNR}) \qquad (1)$$

$$\textbf{s.t. } g(E_t(R, SNR))BC_{UE} < C(t)_{UE}$$

In the second optimization case, the revenue maximization for server is evaluated using the equation as mentioned herein below

$$\max\ g(E_t(R,SNR))\ BC_{UE} - C_sE_s(B) \qquad (2)$$

$$\text{s.t } C_{UE} \ >= 0$$

Solving the two optimization cases, jointly leads to finding $C_{UE}$ as

$$C_{UE} = \max_{g(E\_t\,(R,SNR)\,)} \varphi\ (\ E_a(B),\ E_m(B),\ E_t\ (min\ SNR),\ C_s,\ E_s(B))$$

(3)

The access network fixes the "$C_{UE}$" as calculated above and communicates it to the UE along with the optimal coding rate g. The UE can decide on offloading depending on the magnitude of $C(t)_{UE}$ - $g(E_t$ (**R**, **SNR**))$BC_{UE}$. If this difference is satisfactory for the UE, the UE then offloads the computation to the server. $C(t)_{UE}$ is also used as a parameter for computing the $C_{UE}$.

In one embodiment of the disclosure, $C_{UE}$ is computed by the UE.

As depicted in the figure, the User Equipment (UE) analyzes (301) the requirement for saving power. In an embodiment, the UE while running the application keeps analyzing the need for saving the battery power. The UE requests (302) for computing resources towards cloud server. Further, the UE decides that it can offload the application to a cloud server based on its own calculations of the computing power.

In certain embodiments, the UE comprises an integrated circuit further comprising at least one processor, at least one memory having a computer program code within the circuit, the at least one memory and the computer program code configured to with the at least one processor cause the device to compute a power required for sending application data to the cloud server, to compute a power required to run the application in the remote device, and offload the application data to the cloud server by the remote device for processing the application data if the power required for sending application data to the cloud server is less than the power required to run the application within the remote device.

In one embodiment, the UE determines to offload the application data to the cloud server based on parameters such as distance between the UE and the base station, the channel characteristics, the influence of the local environment, the transmitter and receiver structure at both the base station and the UE computes the power required to send the data at acceptable Quality of service (QoS). Further, the UE computes the power required by an application based on earlier benchmarking results. The UE may or may not be connected to the cloud server when it realizes the need for offloading the application processing on the cloud server.

The cloud server and access network shares (303) the UE information. In an embodiment, the UE information includes the UE number (IMEI, IMSI), the access network to which the UE has been connected and so on. Further, the cloud server computes (304) the cost of saving power for the offloaded application from the UE. In one embodiment, the cloud server computes the cost of saving power by taking various parameters into account. These parameters can include number of resources that are allocated, the amount of time consumed in computing the application, latency and so on.

Then the cloud server informs (305) of the cost of saving power to the UE. If the UE is interested in using the service of the cloud server, then the UE accepts (306) the offer for the cloud service and offloads the application data to the cloud server. In an embodiment, the UE can perform a connection establishment procedure for negotiating with the cloud server. Finally, the cloud server informs (307) access network about cloud access.

In an embodiment, the cost of saving power can be computed at the UE side instead of cloud server computing the cost of saving power.

In an embodiment, the UE can request for computing resources towards cloud server 201 that reside within the access network 201. Further, the cloud server 202 informs the UE about its cost of cloud services.

In one embodiment, "$C_{UE}$" can be computed at the UE and communicated to the cloud server if required. This happens when all the parameters that are required to be calculated are available to the UE that performs the computation.

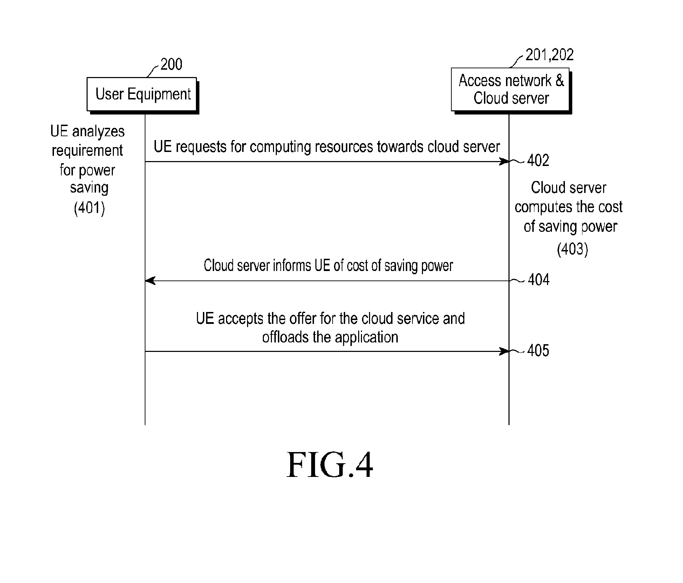

FIG. 4 illustrates a sequence flow diagram of offloading applications to the cloud server which is a part of the access network, according to embodiments as disclosed herein. As depicted in the figure, the cloud server 202 resides within the access network 201. This kind of localized computing resource can be provided by the access network 201 to avoid delays in transfer of information between UE 200 and cloud server 202.

In an embodiment, the access network 201 can broadcast or page the UE indicating the support of cloud services or can send the information in a dedicated message.

In an embodiment, the network can assign dedicated resources and specific Quality of Service (QoS) class for traffic which is generated based on the offloading of applications on cloud servers.

As depicted in the sequence flow diagram, the UE analyzes (401) the requirements for power saving. In an embodiment, the UE while running the application analyzes the need for saving the battery power. Further, the UE requests (402) for computing resources towards cloud server 202, which is present within the access network. The cloud server computes (403) the cost of saving power by taking the parameters like number of resources allocated, the amount of time spent in computing and so on. The cloud server informs (404) of the computed cost of saving power to the UE.

Upon receiving the cost of computing the power from the cloud server 202, the UE decides whether to offload the application to the cloud server or not. If the UE is interested in offloading the application, then UE accepts (405) the offer for the cloud services and offloads the application to cloud server 202, which is present within the access network 201.

In an embodiment, computing the cost of saving power can be calculated at the UE side instead of cloud server.

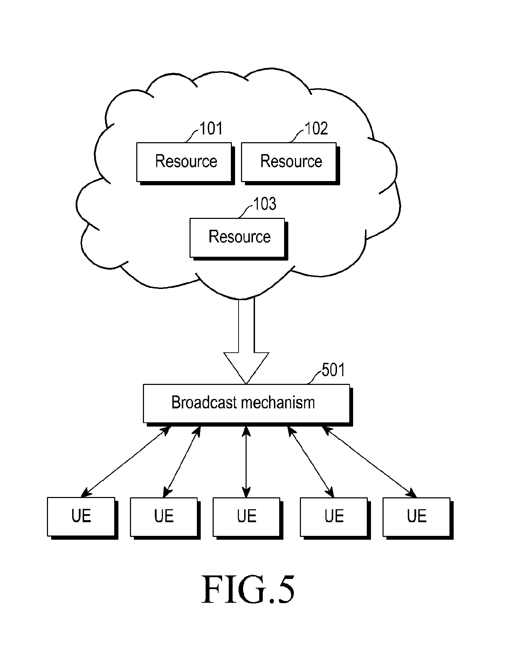

FIG. 5 illustrates the process of broadcast mechanism, according to embodiments as disclosed herein. As depicted in the figure, cloud 100 with resources provides Software as a Service (SaaS) through a broadcast mechanism 501 to a plurality of UEs. When a large number of users need similar kind of software services, the computing power can be shared by broadcasting same content across a geographical area. Further, as shown in the figure plurality of UE share computing power of the cloud server through the broadcasting mechanism 501.

In an embodiment, the cloud 100 provides software as a service through cell broadcast services such as Multimedia Broadcast Multicast Services (MBMS).

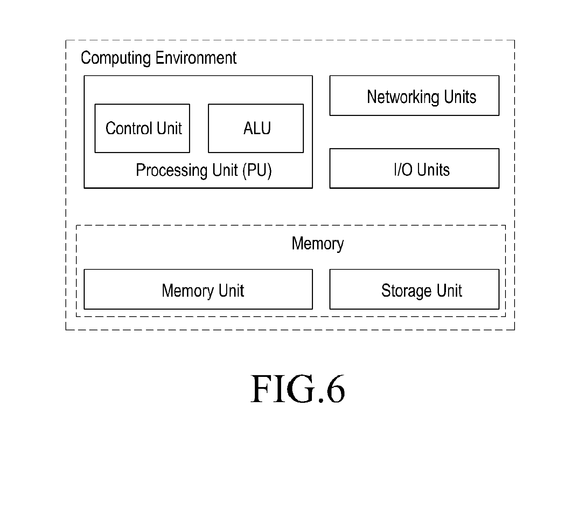

FIG. 6 illustrates a computing environment for implementing the application, according to the embodiments as disclosed herein. As depicted the computing environment comprises at least one processing unit that is equipped with a control unit and an Arithmetic Logic Unit (ALU), a memory, a storage unit, plurality of networking devices, and a plurality Input output (I/O) devices. The processing unit is responsible for processing the instructions of the algorithm. The processing unit receives commands from the control unit in order to perform its processing. Further, any logical and arithmetic operations involved in the execution of the instructions are computed with the help of the ALU.

The overall computing environment can be composed of multiple homogeneous and/or heterogeneous cores, multiple CPUs of different kinds, special media and other accelerators. The processing unit is responsible for processing the instructions of the algorithm. The processing unit receives commands from the control unit in order to perform its processing. Further, any logical and arithmetic operations involved in the execution of the instructions are computed with the help of the ALU. Further, the plurality of process units can be located on a single chip or over multiple chips.

The algorithm comprising of instructions and codes required for the implementation are stored in either the memory unit or the storage or both. At the time of execution, the instructions can be fetched from the corresponding memory and/or storage, and executed by the processing unit.

In case of any hardware implementations various networking devices or external I/O devices can be connected to the computing environment to support the implementation through the networking unit and the I/O device unit.

The embodiments disclosed herein can be implemented through at least one software program running on at least one hardware device and performing network management functions to control the elements. The elements shown in Figs. 1, 2, 5 and 6 include blocks which can be at least one of a hardware device, or a combination of hardware device and software module.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Although the present disclosure has been described with an exemplary embodiment, various changes and modifications can be suggested to one skilled in the art. It is intended that the present disclosure encompass such changes and modifications as fall within the scope of the appended claims.

## Claims

1. A method for providing communication between remote device and cloud server, the method comprising:

    computing a power required for sending application data to the cloud server;
    computing a power required to run an application within the remote device; and
    offloading the application data to the cloud server by the remote device for processing the application data if the power required for sending the application data to the cloud server is less than the power required to run application to process the application data in the remote device.

2. The method as in claim 1, wherein the power required for sending application data to the cloud server is determined by a function of an effective received signal to noise plus interference ratio (SNR) at least one of the remote device and a transmitting point.

3. The method as in claim 1, wherein the power required to run the application in the remote device determines at least partly a cost of processing the application in the remote device.

4. The method as in claim 3, the method further comprising determining the cost for processing the application based on at least one of the power required for computing the application in the remote device and power level.

5. The method as in claim 4, the method further comprising determining a cost for processing the application in at least one of the remote device and the cloud server.

6. The method as in claim 1, wherein the remote device sends a message to a n access network to offload the application data.

7. The method as in claim 1, wherein the remote device provides a quality-of service (QoS) to an access network.

8. The method as in claim 1, wherein the remote device is configured to offload the application data to the cloud server by the remote device based on at least one of: a distance between the remote device and the base station, channel characteristics, influence of the local environment, the transmitter and receiver structure at both the base station and the remote device.

9. The method as in claim 1, wherein the remote device is configured to transmit the application data to the cloud server via a transmitting point.

10. A remote device configured to communicate with a cloud server, the remote device comprising:

an integrated circuit comprising at least one processor;
at least one memory having a computer program code within the circuit;
the computer program code, when executed by the at least one processor, causes the device to:

compute a power required for sending application data to the cloud server;
compute a power required to run the application in the remote device; and
offload the application data to the cloud server by the remote device for processing the application data if the power required for sending application data to the cloud server is less than the power required to run the application within the remote device.

11. The remote device as in claim 10, wherein the remote device is configured to compute the power required for sending application data to the cloud server based on at least one of: distance between the UE and the base station, the channel characteristics, the influence of the local environment, the transmitter and receiver structure at both the base station and the UE.

12. The remote device as in claim 10, wherein the remote device is configured to compute power required to run the application within the remote device as cost of processing the application in the remote device.

13. The remote device as in claim 10, wherein the remote device is configured to determine the cost of processing the application based on at least one of the power required for computing the application in the remote device or power level.

14. The remote device as in claim 10, wherein the remote device is configured to send message to an access network to offload the application data

15. The remote device as in claim 10, wherein the remote device is configured to provide a quality-of-service (QoS) to an access network.

16. The remote device as in claim 14, wherein the remote device is configured to transmit the application data to the cloud server via a transmitting point.

FIG.1

/200

User equipment

/201
Communication interface module

/202
Power module

/203
Display module

/204
Storage module

FIG.2

FIG.3

┌─────────────────┐                                    ┌──────────────────────┐
│  User Equipment │ ⟋200                        201,202⟍│  Access network &    │
└─────────────────┘                                    │     Cloud server     │
                                                        └──────────────────────┘

UE analyzes
requirement       UE requests for computing resources towards cloud server
for power                                                          ⟍402
saving
(401)                                                       Cloud server
                                                          computes the cost
                                                           of saving power
                                                                (403)
                    Cloud server informs UE of cost of saving power
                                                                  ⟍404

                   UE accepts the offer for the cloud service and
                             offloads the application
                                                                  ⟍405

FIG.4

FIG.5

Computing Environment

Control Unit | ALU

Processing Unit (PU)

Networking Units

I/O Units

Memory

Memory Unit | Storage Unit

# FIG.6